## Europäisches Patentamt

## European Patent Office

## Office européen des brevets

(19)

(11) Veröffentlichungsnummer: **0 125 568**
**B1**

(12)

# EUROPÄISCHE PATENTSCHRIFT

(45) Veröffentlichungstag der Patentschrift:
**12.08.87**

(51) Int. Cl.⁴: **B 23 B 27/16**

(21) Anmeldenummer: **84104991.9**

(22) Anmeldetag: **03.05.84**

(54) **Schneideinsatz für ein Zerspanungswerkzeug.**

(30) Priorität: **13.05.83  AT 1752/83**

(43) Veröffentlichungstag der Anmeldung:
**21.11.84 Patentblatt 84/47**

(45) Bekanntmachung des Hinweises auf die Patenterteilung:
**12.08.87 Patentblatt 87/33**

(84) Benannte Vertragsstaaten:
**CH DE FR GB IT LI NL SE**

(56) Entgegenhaltungen:
**DE-A-2 252 351**
**DE-A-2 615 589**
**DE-A-2 810 824**
**DE-A-2 936 134**
**FR-A-2 323 476**
**US-A-3 557 416**
**US-A-4 056 872**

(73) Patentinhaber: **METALLWERK PLANSEE GESELLSCHAFT M.B.H., A-6600 Reutte, Tirol (AT)**

(72) Erfinder: **Maier, Johann, Innerwand 17, A-6600 Pflach (AT)**

(74) Vertreter: **Lohnert, Wolfgang, Dr., Metallwerk Plansee GmbH, A-6600 Reutte, Tirol (AT)**

LIBER, STOCKHOLM 1987

## Beschreibung

Die Erfindung betrifft einen Schneideinsatz für ein Zerspanungswerkzeug zur Bearbeitung von Aluminium, Molybdän und deren Legierungen, Kunststoffen und ähnlichen Materialien.

Derartige Schneideinsätze zeichnen sich durch vergleichsweise große Spanwinkel aus.

Die bisher bekannten Schneideinsätze für die Bearbeitung von Aluminium, Molybdän und deren Legierungen, Kunststoffen und ähnlichen Materialien weisen gerade, parallel zur Grundfläche verlaufende Schneidkanten mit eingeschliffenen, nicht umlaufenden Spanleitstufen auf.

Nachteilig bei diesen Schneideinsätzen ist, daß sich durch das Einschleifen der Spanleitstufen, der für die Bearbeitung erforderliche möglichst große positive Spanwinkel nur im Bereich der Hauptschneidkante erreichen läßt. Im Bereich der Schneidspitze des Schneideinsatzes wird der Spanwinkel immer kleiner bis auf 0° und steigt beim Übergang in die Nebenschneidkante sogar auf einen negativen Wert an. Diese Abnahme des positiven Spanwinkels an der Schneidspitze kann insbesondere beim Eingriff der Schneidkante bis in den Nebenschneidkantenbereich, was beim Kopierdrehen häufig auftritt, zu einem Aufreißen der bearbeiteten Oberfläche und damit zu unzureichenden Oberflächenqualitäten führen.

Darüberhinaus wird durch die, entsprechend bekannten Ausführungen, geraden, parallel zur Grundfläche verlaufenden Schneidkanten sowie durch die kleineren Übergangswinkel zwischen abfallenden und ansteigenden Spanleitstufenflanken, die in der Regel zwischen 90 bis 110° liegen, vielfach nur eine ungünstige Spanbildung erreicht. Die Gefahr einer Schneidkantenbeschädigung und einer sehr großen Aufbauschneidenbildung ist somit beträchtlich. Auch sind die Schnittkräfte im Bereich der Schneidecke sehr groß, so daß die Bruchgefahr in der Schneidecke besonders groß ist.

Die DE-OS 28 10 824 beschreibt einen Schneideinsatz mit Schneidkanten, die von der Schneidecke zur Schneidkantenmitte hin zumindest im Bereich der Schneidecke mit einem Neigungswinkel von 4 - 8° abfallen. Der Schneideinsatz weist weiters eine umlaufende Spanleitstufe auf, deren abfallende Flanke einen Spanwinkel von 15 - 30° aufweist. Dieser Schneideinsatz ist jedoch in erster Linie zur spanenden Bearbeitung von Eisen-Werkstoffen geeignet. Die Bearbeitung von Aluminium, Molybdän, Kunststoffen und ähnlichen Materialien ist mit diesem Schneideinsatz nicht möglich.

Der Erfindung liegt die Aufgabe zugrunde, einen Schneideinsatz für ein Zerspanungswerkzeug zur Bearbeitung von Aluminium, Molybdän und deren Legierungen, Kunststoffen und ähnlichen Materialien derart auszubilden, daß die Nachteile, die bei bisher bekannten Schneideinsätzen für die Bearbeitung dieser Materialien aufgetreten sind, vermieden werden.

Die der Erfindung zugrunde liegende Aufgabe wird dadurch gelöst, daß der Schneideinsatz mit mindestens einer Schneidecke, von der aus sich je zwei Schneidkanten mit daran angrenzenden Spanleitstufen erstrecken, versehen ist und die Schneidkanten von der Schneidecke zur Schneidkantenmitte hin zumindest im Bereich der Schneidecke unter einem Neigungswinkel $5' < \lambda < 20°$ abfallen, die Spanleitstufen sich über den Eckenbereich und zumindest die angrenzenden Bereiche abfallender Schneidkantenabschnitte kontinuierlich erstrecken, die abfallende Flanke jeder Spanleitstufe einen Spanwinkel $\gamma_1 > 15°$ aufweist und im abfallenden Schneidkantenabschnitt von der Schneidecke zur Schneidkantenmitte hin in ihrer Breite zunimmt und die abfallenden Flanken jeder Spanleitstufe mit einem Winkel $\beta_1, \beta_2 > 130°$ an einen gegenüber den Schneidkanten abgesenkten Mittelteil des Schneideinsatzes angrenzen.

Durch den stark positiven Neigungswinkel der Schneidkanten im gesamten Bereich der Schneidecken wird bei der Zerspanung eine Wendelspanbildung erreicht, wodurch sich verringerte Schnittkräfte mit einer geringeren Gefahr der Schneidkantenbeschädigung sowie eine überraschend geringe Aufbauschneidenbildung auch bei ungünstigen Schnittbedingungen ergeben. Darüberhinaus kommt es zu Oberflächengüten, die früher bei der Bearbeitung von Aluminium, Molybdän und ähnlichen Materialien nicht denkbar waren.

Wegen der zunehmenden Breite der abfallenden Flanke jeder Spanleitstufe im stark geneigten Schneidkantenabschnitt ergibt sich eine optimale Spanbildung sowohl bei großen als auch kleinen Schnittiefen sowie eine verstärkte Wendelspanbildung.

Da die abfallende Flanke jeder Spanleitstufe bis zur Winkelhalbierenden der Schneidecke verläuft, ergibt sich auch in den Schneidecken und im Bereich der Nebenschneide ein positiver Spanwinkel und es kann eine wesentlich höhere Schnittleistung ohne eine verminderte Oberflächenqualität erreicht werden. Insbesondere bei einem Eingriff der Schneidkante über die Schneidspitze bis in den Nebenschneidkantenbereich hinein, wie es beim Kopierdrehen auftreten kann, werden daher unverändert gute Oberflächengüten erreicht. Auf die Verwendung von sogenannten rechten und linken Schneideinsätzen, die bei bekannten Schneideinsätzen großteils notwendig war, kann verzichtet werden. Die Lagerhaltungskosten lassen sich auf diese Weise verringern.

Dadurch, daß die abfallenden Flanken jeder Spanleitstufe mit einem Winkel $\beta_1, \beta_2 > 130°$ in einen gegenüber den Schneidkanten abgesenkten Mittelteil des Schneideinsatzes übergehen, trifft der ablaufende Span auf keine stark ansteigenden Flächen, was die Spanbildung ebenfalls verbessert. Der Span wird nicht übermäßig gestaucht. Es ergeben sich wiederum niedrigere Schnittkräfte mit einem weichen Spanablauf, der bei Aluminium, Molybdän und ähnlichen Materialien besonders anzustreben ist.

Besonders vorteilhafte Ausgestaltungen des erfindungsgemäßen Schneideinsatzes ergeben sich aus den Unteransprüchen und werden an Hand der Figuren näher erläutert.

Als das geeignetste Material für Schneideinsätze zur Bearbeitung von Aluminium, Molybdän und ähnlichen Materialien hat sich Hartmetall erwiesen. Um eine wirtschaftliche Fertigung zu ermöglichen, können bei einem Schneideinsatz entsprechend der Erfindung die Spanleitstufen nicht mehr wie bisher üblich eingeschliffen werden, sondern müssen bereits mit dem Pressen des Schneideinsatzes eingeformt werden.

Insbesondere die großen positiven Neigungswinkel der Schneidkanten in Verbindung mit den großen positiven Spanwinkeln, wie sie für die Bearbeitung von Aluminium, Molybdän und ähnlichen Materialien nötig sind, ließen gewisse preßtechnische Probleme bei der Herstellung eines erfindungsgemäßen Schneideinsatzes aus Hartmetall erwarten. Auch Verzugsprobleme beim Sintern waren bei der erfindungsgemäßen Ausgestaltung nicht auszuschließen.

Es hat sich jedoch gezeigt, daß diese Probleme aufgrund der in den letzten Jahren wesentlich verbesserten Preßtechniken und Sinterverfahren durchaus zu bewältigen sind. Eine besonders vorteilhafte Herstellung eines erfindungsgemäßen Schneideinsatzes ist z. B. dadurch möglich, daß der Schneideinsatz an der Freifläche zumindest bis zum parallel zur Grundfläche verlaufenden Schneidkantenabschnitt bzw. bis zum tiefsten Punkt der Schneidkanten beim Pressen mit einer zylindrischen Fase versehen wird, die dann gleichzeitig mit dem Schleifen der positiven Freifläche zur Erzeugung einer völlig scharfkantigen Schneidkante, entfernt wird.

Eine Ausführung der Erfindung wird im folgenden anhand der Zeichnungen näher erläutert.

Es zeigen:

Figur 1 einen Schneideinsatz entsprechend der Erfindung in Draufsicht

Figur 2 den Schneideinsatz nach Figur 1 in Seitenansicht

Figur 3 den Schneideinsatz nach Figur 1 im Schnitt A-A

Figur 4 den Schneideinsatz nach Figur 1 im Schnitt B-B

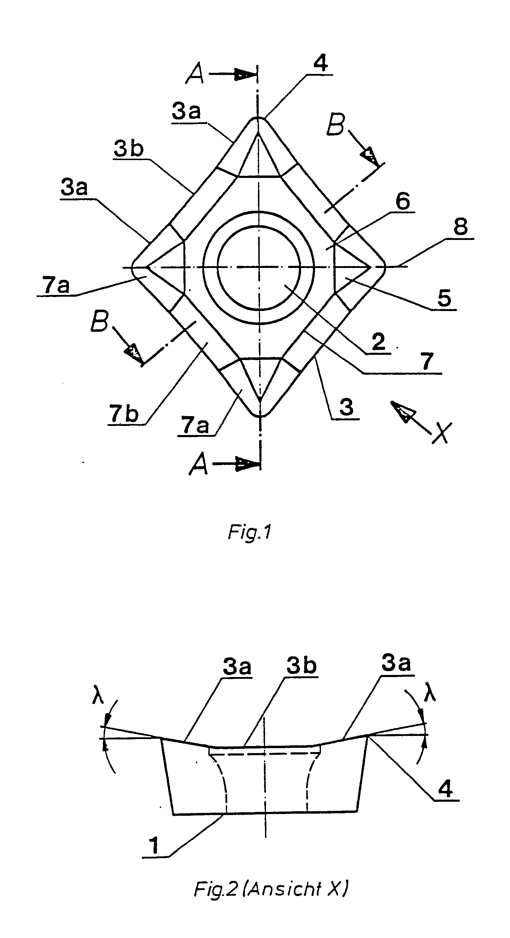

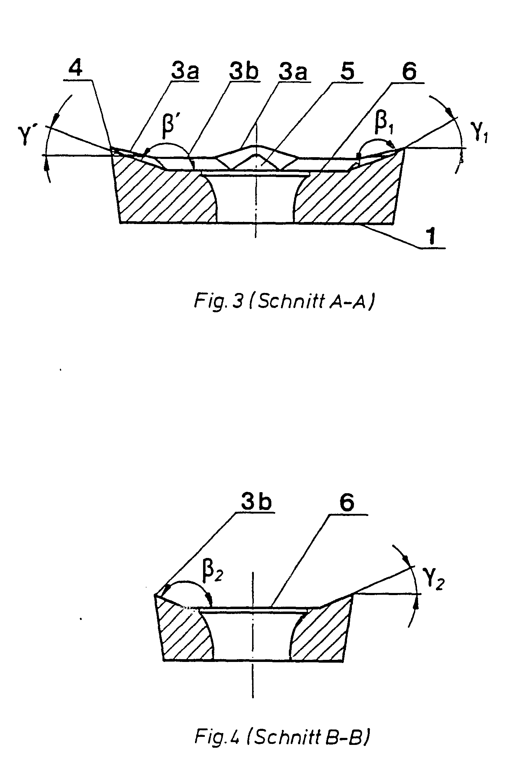

Der in den Figuren 1 bis 4 dargestellte Schneideinsatz ist als Wendeschneidplatte mit Mittelloch -2- und vier Schneidecken -4- ausgeführt. Jede Schneidkante -3- besteht aus zwei geraden, von den Schneidecken zur Schneidkantenmitte hin geneigten Schneidkantenabschnitten -3a- mit einem Neigungswinkel λ von 10° sowie aus einem parallel zur horizontalen Auflagefläche -1- verlaufenden Mittelabschnitt -3b-.

Parallel zu den Schneidkanten -3- verlaufen Spanleitstufen -7-, die scharfkantig ohne dazwischenliegende Fase in die Schneidkanten -3- übergehen. Im Bereich der geneigten Schneidkantenabschnitte -3a- weisen die abfallenden ebenen Flanken -7a- der Spanleitstufen einen Spanwinkel $\gamma_1$ von 25° auf, nehmen in ihrer Breite von der Schneidecke -4- zur Schneidkantenmitte hin zu und verlaufen bis zur Winkelhalbierenden -8-jeder Schneidecke -4-.

Die Wendeschneidplatte weist einen gegenüber den Schneidkanten abgesenkten Mittelteil -6- auf, der mit Ausnahme von dreieckförmigen ebenen Flächen -5- in den Eckbereichen parallel zur Auflagefläche -1- verläuft. Die Flächen -5- weisen eine Spanwinkel $\gamma^1$ von 18° auf und gehen mit einem Winkel $\beta^2$ von 162° in den horizontalen Bereich des Mittelteiles -6- über. Die abfallenden Flanken -7a- der Spanleitstufen grenzen mit einem Winkel $\beta_1$ von 155° an diese Flächen -5- des Mittelteiles -6-an.

Im Bereich des Mittelabschnittes -3b- jeder Schneidkante weist die abfallende ebene Flanke -7b- jeder Spanleitstufe einen Spanwinkel $\gamma_2$ von 20° auf, verläuft mit gleichbleibender Breite und geht mit einem Winkel $\beta_2$ von 160° in den horizontalen Mittelteil -6- der Wendeschneidplatte über.

Der Spanwinkel $\gamma^1$ der geneigten Abschnitte -5- ist durch die Form dieser Abschnitte, durch Länge und Neigungswinkel der Schneidkantenabschnitte -3a- sowie Breite und Spanwinkel der abfallenden Spanleitstufenflanken -7a- bestimmt. Es ist besonders vorteilhaft, diese Parameter so zu wählen, daß auch die geneigten Flächen -5- mit einem Winkel $\beta^1 > 130°$ in den horizontalen Bereich des Mittelteiles -6- übergehen.

Die in den Figuren dargestellte Ausführung eines Schneideinsatzes stellt eine besonders bevorzugte Ausführung der Erfindung dar, ist jedoch nicht darauf beschränkt.

So ist es beispielsweise denkbar, daß die geneigten Schneidkantenabschnitte -3a- kurvenförmig ausgebildet sind. Außerdem können diese Schneidkantenabschnitte -3a- bis zur Schneidkantenmitte hin verlaufen, so daß der Mittelabschnitt -3b- entfällt. Die geneigten Flächen -5- des Mittelteiles -6- können konkav oder konvex ausgeführt sein. Ebenso kann der Rest des Mittelteiles -6- zum Mittelloch -2- hin leicht ansteigen und auch konkave oder konvexe Form aufweisen. Auch kann es vorteilhaft sein, daß die abfallenden Flanken -7a,7b- der Spanleitstufen in einem kurvenförmigen Verlauf in den den abgesenkten Mittelteil -6- übergehen.

**Patentansprüche**

1. Schneideinsatz mit mindestens einer Schneidecke (4), von der aus sich je zwei Schneidkanten (3) mit daran angrenzenden Spanleitstufen (7) erstrecken, bei dem die Schneidkanten (3) von der Schneidecke (4) zur Schneidkantenmitte hin zumindest im Bereich der Schneidecke (4) unter einem Neigungswinkel $5 < \lambda < 20°$ abfallen, die Spanleitstufen (7) sich über den Eckenbereich und zumindest die angrenzenden Bereiche abfallender Schneidkantenabschnitte (3a) kontinuierlich erstrecken, die abfallende Flanke (7a) jeder Spanleitstufe (7) einen Spanwinkel $\gamma_1 > 15°$ aufweist und im abfallenden Schneidkantenabschnitt (3a) von der Schneidecke (4) zur Schneidkantenmitte hin in ihrer Breite zunimmt und die abfallenden Flanken (7a, 7b) jeder Spanleitstufe (7) mit einem Winkel $\beta_1, \beta_2 > 130°$ an einen gegenüber den Schneidkanten (3) abgesenkten Mittelteil (6) des Schneideinsatzes angrenzen.

2. Schneideinsatz nach Anspruch 1, dadurch gekennzeichnet, daß jede Schneidkante (4) jeweils aus geraden geneigten Abschnitten (3a) sowie aus einem horizontal verlaufenden Mittelabschnitt (3b) zusammengesetzt ist und die abfallende Flanke (7b) der Spanleitstufe (7) im Mittelabschnitt (3b) in ihrer Breite gleichbleibend ist.

3. Schneideinsatz nach Anspruch 1 oder 2, dadurch gekennzeichnet, daß der Spanwinkel $\gamma_1$ der abfallenden Flanke (7a) jeder Spanleitstufe (7) größer ist als der Spanwinkel $\gamma_2$ der abfallenden Flanke (7b) jeder Spanleitstufe (7).

4. Schneideinsatz nach Anspruch 1 bis 3, dadurch gekennzeichnet, daß der abgesenkte Mittelteil (6) des Schneideinsatzes im wesentlichen horizontal verläuft und im Bereich der Schneidecken (4) geneigte Ebene dreieckförmige Flächen (5) aufweist, die mit einem Winkel $\beta'$ in den horizontal verlaufenden Bereich des Mittelteiles (6) übergehen.

## Claims

1. Cutting insert with at least one cutting corner (4), wherefrom two cutting edges (3) with adjacent chip grooves (7) are extending, at least in the region of the cutting corner (4) the cutting edges (3) are sloping from the cutting corner (4) to the middle of the cutting edge with an angle of inclination of $5° < \lambda < 20°$, the chip grooves (7) are extending continuously at least across the corner region and the adjacent regions of sloping cutting edge sections (3a), the sloping flank (7a) of each chip groove (7) is provided with a chip angle $\gamma_1 > 15°$ having a width increasing in the sloping cutting edge section (3a) from the cutting corner (4) towards the middle of the cutting edge and the sloping flanks (7a, 7b) of each chip groove (7) include an angle $\beta_1, \beta_2 > 130°$ with a central part (6) of the cutting insert, which central part is bordering on the sloping flanks (7a, 7b) of the chip groove and has a lower altitude compared with the cutting edges (3).

2. Cutting insert according to claim 1, characterized in, that each cutting edge (4) is composed of straight inclined sections (3a) and of an horizontal middle section (3b) and that the sloping flank (7b) of the chip groove (7) is constant in its width in the middle section (3b).

3. Cutting insert according to claim 1 or 2, characterized in, that the chip angle $\gamma_1$ of the sloping flank (7a) of each chip groove (7) is larger than the chip angle $\gamma_2$ of the sloping flank (7b) of each chip groove (7).

4. Cutting insert according to claims 1 to 3, characterized in, that the lowered central part (6) of the cutting insert extends essentially horizontal and is provided with inclined flat triangular areas (5) at the region of the cutting corners (4) which are bordering with an angle $\beta'$ on the horizontal region of the central part (6).

## Revendications

1. Plaquette de coupe avec au moins un coin de coupe (4) à partir duquel s'étendent deux arêtes de coupe (3) bordées d'échelons guide-copeaux (7), dans laquelle, depuis le coin de coupe (4) vers leur milieu, les arêtes de coupe (3) sont en déclivité, au moins dans la région du coin de coupe (4), sous un angle d'inclinaison $\lambda$ tel que $5° < \lambda < 20°$, les échelons guide-copeaux (7) s'étendent de manière continue sur la région du coin et au moins les régions adjacentes des portions (3a) d'arêtes de coupe en déclivité, le flanc (7a) en déclivité de chaque échelon guide-copeaux (7) présente un angle de dégagement $\gamma_1 > 15°$ et croît en largeur dans la portion d'arête de coupe en déclivité (3a), depuis le coin de coupe (4) vers le milieu de l'arête de coupe, et les flancs en déclivité (7a, 7b) de chaque échelon guide-copeaux (7) bordent, avec un angle $\beta_1, \beta_2 > 130°$, une partie médiane (6) de la plaquette de coupe, cette partie médiane étant en dépression par rapport aux arêtes de coupe (3).

2. Plaquette de coupe selon revendication 1, caractérisée en ce que chaque arête de coupe (4) est composée de portions rectilignes inclinées (3a) et d'une portion médiane (3b) à tracé horizontal, et le flanc en déclivité (7b) de l'échelon guide-copeaux (7) est de largeur constante dans la portion médiane (3b).

3. Plaquette de coupe selon revendication 1 ou 2, caractérisée en ce que l'angle de dégagement $\gamma_1$ du flanc en déclivité (7a) de chaque échelon guide-copeaux (7) est plus grand que l'angle de dégagement $\gamma_2$ du flanc en déclivité (7b) de chaque échelon guide-copeaux (7).

4, Plaquette de coupe selon revendication 1 à 3, caractérisée en ce que la partie mediane en dépression (6) de l'insert est sensiblement horizontale et présente, dans la région des coins de coupe (4), des surfaces triangulaires planes inclinées (5) qui se raccordent, avec un angle $\beta'$, à la région horizontale de la partie médiane (6).

Fig.1

Fig.2 (Ansicht X)

1

Fig. 3 (Schnitt A–A)

Fig. 4 (Schnitt B–B)

3